# DEMANDE DE BREVET EUROPEEN

(11) **EP 4 299 422 A1**
(43) Date de publication de la demande: **03.01.2024**
(21) Numéro de dépôt: 23175860.8
(22) Date de dépôt: 26.05.2023
(51) Int. Cl.: B62D 35/02, B62D 21/11, B62D 25/20, B62D 23/00

(54) **VÉHICULE LÉGER À PROPULSION ÉLECTRIQUE DOTÉ D'UN DÉFLECTEUR DE PROTECTION ANTI-PROJECTIONS POUR LA MACHINE ÉLECTRIQUE**

(30) Priorité: 28.06.2022 FR 2206438
(71) Demandeur: Stellantis Auto SAS, 78300 Poissy (FR)
(72) Inventeur: LAHRACH, ACHRAF, 20270 CASABLANCA (MA)

(57) **Abrégé**

[L'invention concerne un véhicule léger à propulsion électrique de type tricycle ou quadricycle comportant une structure de caisse (1) dotée d'un berceau d'accueil mécano-soudé (100) ainsi qu'une chaîne de propulsion électrique couplée à un train de roue, ladite chaîne de propulsion électrique comprenant une machine électrique (200) logée au moins partiellement dans ledit berceau d'accueil (100) ; caractérisé en ce qu'il comporte un déflecteur de protection anti-projections (300) recouvrant au moins partiellement par le dessous ledit berceau (100) en y étant fixé rigidement.

## Description

### [Domaine technique]

L'invention concerne de manière générale les véhicules légers à propulsion électrique de type tricycle ou quadricycle présentant une taille compacte particulièrement adaptée à un usager urbain. Elle vise plus particulièrement un tel véhicule léger doté d'un déflecteur de protection anti-projections pour la machine électrique.

### [Technique antérieure]

L'augmentation continue du nombre de véhicules en circulation pose de nombreux problèmes de congestion liés à la circulation et au stationnement de ces véhicules, notamment dans les zones de centre-ville.

Afin de faciliter la circulation et le stationnement, un nombre toujours croissant d'usagers se tourne vers des engins motorisés à deux roues de type motos ou scooters mais ces derniers n'offrent pas le même niveau de sécurité et de protection contre les intempéries au conducteur et à son éventuel passager.

Pour ces raisons, ces dernières années ont vu le l'apparition sur le marché de véhicules légers à propulsion électrique de type tricycle ou quadricycle dont les dimensions réduites sont particulièrement adaptées à un usage en milieu urbain.

Ces véhicules légers de type tricycle ou quadricycle comportent classiquement une structure de caisse associée à une chaîne de propulsion électrique couplée à un train de roue. Cette chaîne de propulsion électrique comprend une machine électrique logée au moins partiellement dans un berceau d'accueil mécano-soudé de cette structure de caisse.

Etant généralement dépourvus de pare-boue au niveau des passages de roues séparant les roues de ce train de la machine électrique, ces dernières ont tendance, notamment lors du roulage du véhicule sur une chaussée inondée ou en cas de passage dans un gué, à projeter vers cette machine électrique des gravillons et de l'eau,

Ces projections de gravillon et d'eau peuvent détériorer certains éléments constitutifs de la machine électrique et/ou entrainer l'apparition de courts-circuits électriques pouvant conduire à la destruction de l'électronique de puissance commandant cette machine électrique.

### [Exposé de l'invention]

La présente invention vise donc à améliorer la situation.

Elle propose à cet effet un véhicule léger à propulsion électrique de type tricycle ou quadricycle comportant une structure de caisse dotée d'un berceau d'accueil mécano-soudé ainsi qu'une chaîne de propulsion électrique couplée à un train de roue, ladite chaîne de propulsion électrique comprenant une machine électrique logée au moins partiellement dans ledit berceau d'accueil ;
caractérisé en ce qu'il comporte un déflecteur de protection anti-projections recouvrant au moins partiellement par le dessous ledit berceau en y étant fixé rigidement.

L'adjonction d'un tel déflecteur permet ainsi de protéger efficacement la machine électrique du véhicule des projections de gravillons et/ou d'eau pouvant survenir notamment lors du roulage du véhicule sur une chaussée inondée ou lors du passage dans un gué.

Selon des caractéristiques préférées dudit véhicule selon l'invention :
- ledit déflecteur est constitué de deux demi-déflecteurs s'étendant symétriquement de part et d'autre du plan longitudinal vertical médian dudit berceau depuis une zone de jonction située au niveau dudit plan médian ;
- chaque demi-déflecteur présente un profil en escalier et comprend un panneau inférieur sensiblement horizontal, un panneau supérieur sensiblement horizontal ainsi qu'un panneau intermédiaire s'étendant sensiblement verticalement entre lesdits panneaux inférieur et supérieur ;
- les panneaux supérieur et intermédiaire de chaque demi-déflecteur comprennent chacun au moins un orifice traversé par une agrafe de clipsage venant s'encliqueter dans un trou correspondant ménagé dans un élément constitutif dudit berceau d'accueil ;
- le panneau inférieur de chaque demi-déflecteur comprend au moins un orifice traversé par une vis venant se visser dans un trou correspondant ménagé dans un élément constitutif dudit berceau d'accueil ;
- chaque demi-déflecteur comprend des moyens d'indexage longitudinal comprenant un ergot saillant de la face supérieure dudit panneau supérieur et coopérant en butée avec la face avant d'un élément constitutif dudit berceau d'accueil ;
- chaque demi-déflecteur comprend des moyens d'indexage transversal comprenant un ergot saillant de la face supérieure dudit panneau supérieur et coopérant en butée avec la face interne d'un élément constitutif dudit berceau d'accueil ;
- chaque demi-déflecteur comprend des moyens d'indexage vertical comprenant un ergot saillant de la face interne dudit panneau intermédiaire et coopérant en butée avec la face supérieure d'un élément constitutif dudit berceau d'accueil ;
- chaque demi-déflecteur comprend au moins une nervure de renfort en forme d'équerre s'étendant suivant un plan sensiblement transversal vertical à cheval sur lesdits panneaux supérieur et intermédiaire ; et/ou
- les bords inférieurs internes desdits demi-déflecteurs coopèrent à chevauchement croisé au niveau de ladite zone de jonction.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue partielle en perspective de dessus de la partie avant de la structure de caisse d'un véhicule quadricycle sur laquelle sont montés une machine électrique de propulsion ainsi qu'un déflecteur de protection anti-projections pour ladite machine électrique ;
- [Fig 2] est une vue agrandie en perspective de dessous montrant le demi-déflecteur gauche du véhicule protégeant la partie gauche de la machine électrique ;
- [Fig 3] représente un agrandissement illustrant la coopération en butée des ergots d'indexage longitudinal et transversal du demi-déflecteur gauche avec des éléments constitutifs du berceau d'accueil ;
- [Fig 4] est un agrandissement illustrant la coopération en butée de l'ergot d'indexage vertical du demi-déflecteur gauche avec un élément constitutif du berceau d'accueil ; et
- [Fig 5] représente un agrandissement illustrant la coopération à chevauchement croisé des bords inférieurs internes respectifs des deux demi-déflecteurs au niveau de leur zone de jonction.

### [Description détaillée]

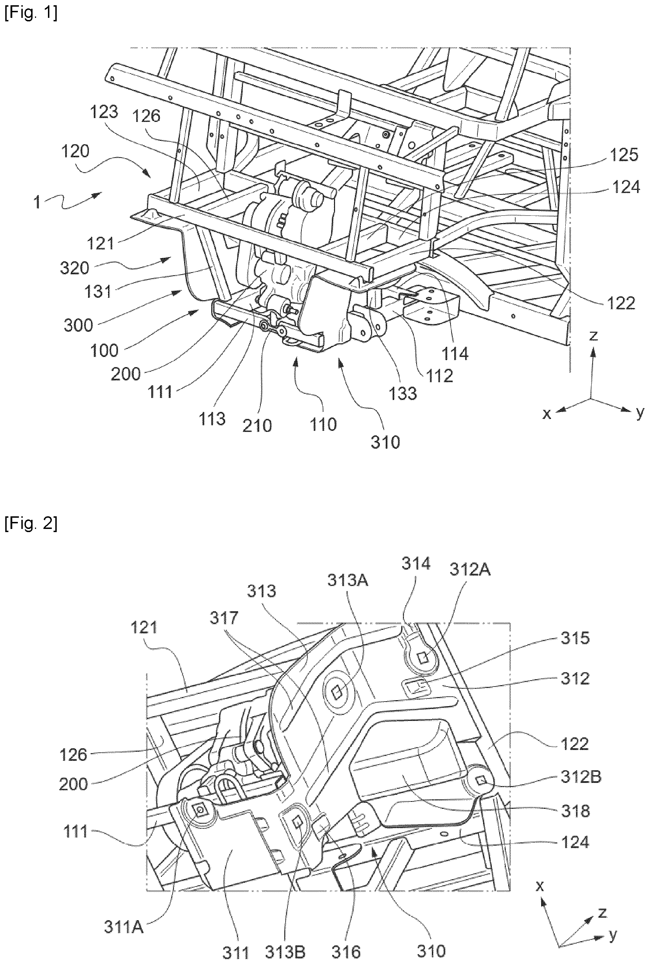

La figure 1 représente une vue partielle de la structure de caisse 1 d'un véhicule léger à propulsion électrique de type quadricycle sur laquelle sont montés une machine électrique de propulsion 200 ainsi qu'un déflecteur de protection 300 de cette machine électrique 200 contre les projections d'eau et de gravillons.

On définit par rapport à ce véhicule un repère orthogonal direct
XYZ comprenant trois axes perpendiculaires deux à deux, à savoir :
- un axe longitudinal horizontal X, parallèle au sol et orienté selon la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

Les termes « externe » et « interne » seront quant à eux utilisés pour définir la position relative d'un élément par référence au plan longitudinal vertical médian du véhicule. L'élément le plus proche de ce plan sera ainsi qualifié d'interne par opposition à l'autre élément plus éloigné de ce même plan qui sera quant à lui qualifié d'externe.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement vertical » indiquera qu'un écart de l'ordre de 20° par rapport à une orientation strictement perpendiculaire est admis dans le cadre de l'invention.

Réalisée à partir de pièces métalliques assemblées les unes aux autres par mécano soudage, la structure de caisse 1 comporte, dans sa partie avant, un berceau d'accueil 100 pour la machine électrique 200 de la chaîne de propulsion électrique du véhicule reliée au train de roues avant non représenté de ce véhicule.

Toujours en référence à la figure 1, ce berceau d'accueil 100 comprend un cadre horizontal inférieur 110 et un cadre horizontal supérieur 120 surplombant ce cadre inférieur 110 auquel il est relié rigidement.

Le cadre horizontal inférieur 110 est délimité par une traverse avant 111, deux longerons latéraux 112, 113 et par une traverse arrière 114.

Le cadre horizontal supérieur 120 est délimité par une traverse avant 121, deux longerons latéraux 122, 123 et par une traverse arrière 124. Il comprend en outre deux barreaux longitudinaux 125, 126 s'étendant entre les traverses avant 121 et arrière 124 en étant écarté chacun d'une même distance vis-à-vis d'un longeron latéral correspondant 122, 123.

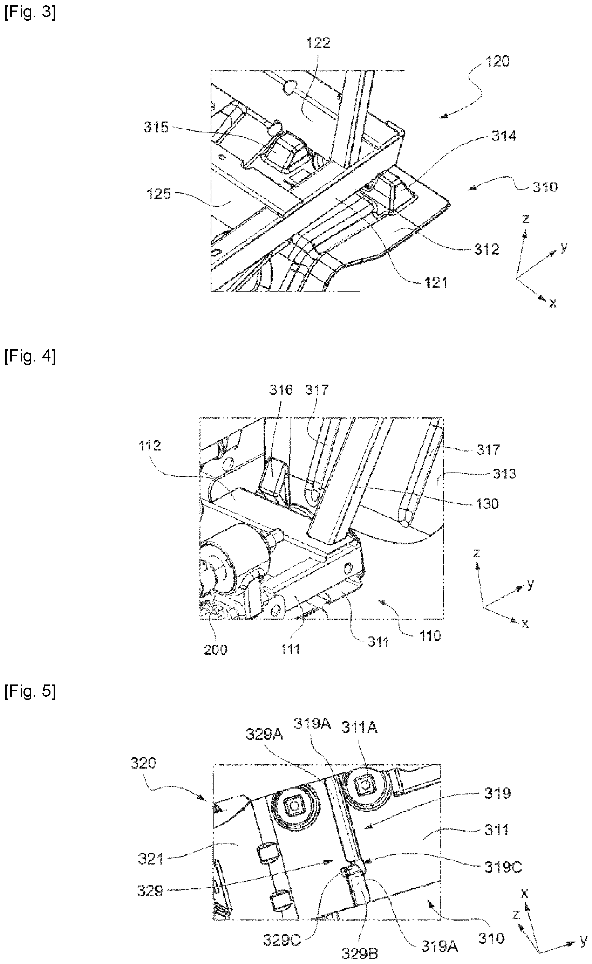

Les cadres inférieur 110 et supérieur 120 sont reliés rigidement l'un à l'autre par l'intermédiaire de quatre montants, à savoir :
- deux montants avant 130, 131 (le montant 130 étant seulement visible sur la figure 4) reliant chacun la portion avant d'un longeron latéral respectif 112, 113 du cadre inférieur 110 à celle d'un barreau longitudinal correspondant 125, 126 du cadre supérieur 120 ; et
- deux montants arrière (seul l'un d'entre eux 133 étant visible sur la figure 1) reliant chacun la portion arrière d'un longeron latéral respectif 112, 113 du cadre inférieur 110 à la traverse arrière 124 du cadre supérieur 120.

Tel qu'illustré sur la figure 1, le berceau 100 ainsi constitué délimite un logement d'accueil hébergeant la majeure partie de la machine électrique 200 du véhicule.

Cette machine électrique 200 est en outre rigidement fixée au berceau 100 par l'intermédiaire de différentes pattes d'attache telles que la patte 210 visible sur la figure 1 et vissée sur la traverse avant 111 du cadre inférieur 110.

Le déflecteur 300 recouvre au moins partiellement par le dessous ce berceau 100 de sorte à protéger la machine électrique 200 contre les projections de gravillon et d'eau causées par les roues avant du véhicule lors du roulage en cas de chaussée inondée ou de passage dans un gué.

Ce déflecteur 300 est constitué de deux demi-déflecteurs 310, 320 s'étendant symétriquement de part et d'autre du plan longitudinal vertical médian du berceau 100 (et du véhicule) depuis une zone de jonction située au niveau de ce plan médian et visible sur la figure 5.

Chacun de ces demi-déflecteurs 310, 320 est venu de moulage d'une seule pièce à partir d'un matériau thermoplastique avantageusement renforcé en fibres naturelles et/ou synthétiques (par exemple, un polypropylène élastomère tel que le GG-PP 1065).

On va maintenant décrire, en référence à la figure 2, le demi-déflecteur gauche 310 recouvrant au moins partiellement la partie gauche du berceau 100, sachant que le déflecteur droit 320 recouvrant au moins partiellement la partie droite de ce même berceau 100 lui est symétriquement identique, hormis au niveau de son bord inférieur interne 329 coopérant au niveau de la zone de jonction avec le bord inférieur interne 319 du demi-déflecteur gauche 310 comme cela sera explicité par la suite.

Présentant un profil sensiblement en escalier, ce demi-déflecteur gauche 310 comprend :
- un panneau inférieur sensiblement horizontal 311 recouvrant au moins partiellement la moitié avant gauche du cadre inférieur 110 ;
- un panneau supérieur sensiblement horizontal 312 recouvrant au moins partiellement la portion d'extrémité gauche du cadre supérieur 120 s'étendant latéralement entre le barreau longitudinal 125 et le longeron latéral 122 ; et
- un panneau intermédiaire 313 s'étendant sensiblement verticalement entre les panneaux inférieur 311 et supérieur 312 en recouvrant le montant avant 130.

Tel qu'illustré sur cette figure 2, le demi-déflecteur gauche 310 comporte une pluralité d'orifices permettant sa fixation sur la partie gauche du berceau d'accueil 100.

Le panneau supérieur 312 comprend ainsi deux orifices carrés 312A, 312B écartés longitudinalement l'un de l'autre et traversés par des agrafes de clipsage (non représentées) venant s'encliqueter dans des trous correspondants (non visibles) ménagés dans la face inférieure du longeron latéral gauche 122 du cadre supérieur 120.

Le panneau intermédiaire 313 comprend également deux orifices carrés 313A, 313B traversés par des agrafes de clipsage (non représentées) venant s'encliqueter dans des trous correspondants (non visibles) ménagés respectivement dans la face externe du montant avant 130 et dans celle du longeron latéral gauche 112 du cadre inférieur 110.

Ces agrafes de clipsage sont avantageusement constituées par des agrafes de type métalloplastiques.

Le panneau inférieur 311 comprend quant à lui un orifice circulaire 311A traversé par une vis (non représentée) venant se visser dans un trou correspondant ménagé sur la face inférieure de la traverse avant 111 du cadre inférieur 110.

Afin de faciliter son positionnement et son pré-maintien par l'opérateur dans la position de montage durant les opérations de vissage, le demi-déflecteur 310 comporte des moyens d'indexage longitudinal, transversal et vertical aptes à coopérer avec certains éléments constitutifs du berceau 100.

En référence à la figure 3, les moyens d'indexage longitudinal comportent en l'espèce un ergot 314 saillant de la face supérieure du panneau supérieur 312 et coopérant en butée avec la face avant de l'extrémité latérale gauche de la traverse avant 121 du cadre supérieur 120 du berceau 100.

Toujours en référence à cette figure 3, les moyens d'indexage transversaux comportent en l'espèce un ergot 315 saillant de la face supérieure du panneau supérieur 312 et coopérant en butée avec la face interne de la portion avant du longeron latéral 122 du cadre supérieur 120 du berceau 100.

En référence à la figure 4, les moyens d'indexage vertical comportent en l'espèce un ergot 316 saillant de la face interne du panneau intermédiaire 313 et coopérant en butée avec la face supérieure de la portion avant du longeron latéral gauche 112 du cadre inférieur 110 du berceau 100.

De manière à le rigidifier et comme on peut le remarquer sur la figure 2, le demi-déflecteur 310 comprend également deux nervures de renfort en forme d'équerre 317 s'étendant suivant des plans sensiblement transversaux verticaux à cheval sur les panneaux supérieur 312 et intermédiaire 313.

Toujours en référence à cette figure 2, le demi-déflecteur 310 présente également une protubérance creuse 318 s'étendant en relief depuis la face inférieure du panneau supérieur 312 et la face externe du panneau intermédiaire 313, cette protubérance 318 délimitant une cavité logeant un organe non visible du véhicule 1 saillant du berceau 100.

Au niveau de la zone de fonction entre les deux déflecteurs 310, 320 et tel qu'illustré par la figure 5, leurs bords inférieurs internes respectifs 319, 329 coopèrent à chevauchement croisé.

Le bord latéral interne 319 du panneau inférieur 311 du demi-déflecteur 310 présente ainsi une portion avant 319A s'étendant selon un plan horizontal situé légèrement en dessous du plan horizontal moyen de ce panneau 311 et se superposant sur une portion avant correspondante 329A du bord latéral interne 329 du panneau inférieur 321 du demi-déflecteur 320.

Le bord latéral interne 329 du panneau inférieur 321 du demi-déflecteur 320 présente une portion arrière 329B s'étendant selon un plan horizontal situé légèrement en dessous du plan horizontal moyen de ce panneau 321 et se superposant sur une portion arrière 319A du bord latéral interne 319 du panneau inférieur 311 du demi-déflecteur 310.

Ce bord latéral interne 329 du panneau inférieur 321 du demi-déflecteur 320 présente en outre une rampe de liaison 329C reliant ses portions avant 329A et arrière 329B et traversant une encoche 319C séparant longitudinalement les portions avant 319A et arrière 319B du bord latéral interne 319 du panneau inférieur 311 du demi-déflecteur 310.

Selon des variantes de réalisation non représentées, les demi-déflecteurs et/ou le berceau peuvent être conformés différemment.

Les demi-déflecteurs peuvent par exemple être obtenus chacun à partir d'une feuille de tôle pliée et emboutie après découpe. La conformation et/ou le nombre d'orifices de clipsage et de vissage ménagés sur les panneaux de chaque demi-déflecteur peuvent également différer.

On rappelle enfin que l'invention ne se limite pas aux formes de réalisation particulières qui ont été décrites ici à titre d'exemple. L'homme du métier, selon les applications de l'invention, pourra apporter différentes modifications et variantes entrant dans le champ de protection de l'invention.

## Revendications

1. Véhicule léger à propulsion électrique de type tricycle ou quadricycle comportant une structure de caisse (1) dotée d'un berceau d'accueil mécano-soudé (100) ainsi qu'une chaîne de propulsion électrique couplée à un train de roue, ladite chaîne de propulsion électrique comprenant une machine électrique (200) logée au moins partiellement dans ledit berceau d'accueil (100) ;
**caractérisé en ce qu'**il comporte un déflecteur de protection anti-projections (300) recouvrant au moins partiellement par le dessous ledit berceau (100) en y étant fixé rigidement.

2. Véhicule selon la revendication 1, **caractérisé en ce que** ledit déflecteur (300) est constitué de deux demi-déflecteurs (310, 320) s'étendant symétriquement de part et d'autre du plan longitudinal vertical médian dudit berceau (100) depuis une zone de jonction située au niveau dudit plan médian.

3. Véhicule selon la revendication 2, **caractérisé en ce que** chaque demi-déflecteur (310, 320) présente un profil en escalier et comprend un panneau inférieur sensiblement horizontal (311, 321), un panneau supérieur sensiblement horizontal (312) ainsi qu'un panneau intermédiaire (313) s'étendant sensiblement verticalement entre lesdits panneaux inférieur (311, 321) et supérieur (312).

4. Véhicule selon la revendication 3, **caractérisé en ce que** les panneaux supérieur (312) et intermédiaire (313) de chaque demi-déflecteur (310, 320) comprennent chacun au moins un orifice (312A, 312B, 313A, 313B) traversé par une agrafe de clipsage venant s'encliqueter dans un trou correspondant ménagé dans un élément constitutif (122, 130, 112) dudit berceau d'accueil (100).

5. Véhicule selon l'une des revendications 3 ou 4, **caractérisé en ce que** le panneau inférieur (311, 321) de chaque demi-déflecteur (310, 320) comprend au moins un orifice (311A) traversé par une vis venant se visser dans un trou correspondant ménagé dans un élément constitutif (111) dudit berceau d'accueil (100).

6. Véhicule selon l'une des revendications 3 à 5, **caractérisé en ce que** chaque demi-déflecteur (310, 320) comprend des moyens d'indexage longitudinal comprenant un ergot (314) saillant de la face supérieure dudit panneau supérieur (312) et coopérant en butée avec la face avant d'un élément constitutif (121) dudit berceau d'accueil (100).

7. Véhicule selon l'une des revendications 3 à 6, **caractérisé en ce que** chaque demi-déflecteur (310, 320) comprend des moyens d'indexage transversal comprenant un ergot (315) saillant de la face supérieure dudit panneau supérieur (312) et coopérant en butée avec la face interne d'un élément constitutif (122) dudit berceau d'accueil (100).

8. Véhicule selon l'une des revendications 3 à 7, **caractérisé en ce que** chaque demi-déflecteur (310, 320) comprend des moyens d'indexage vertical comprenant un ergot (316) saillant de la face interne dudit panneau intermédiaire (313) et coopérant en butée avec la face supérieure d'un élément constitutif (112) dudit berceau d'accueil (100).

9. Véhicule selon l'une des revendications 3 à 8, **caractérisé en ce que** chaque demi-déflecteur (310, 320) comprend au moins une nervure de renfort (317) en forme d'équerre s'étendant suivant un plan sensiblement transversal vertical à cheval sur lesdits panneaux supérieur (312) et intermédiaire (313).

10. Véhicule selon l'une des revendications 2 à 9, **caractérisé en ce que** les bords inférieurs internes (319, 329) desdits demi-déflecteurs (310, 320) coopèrent à chevauchement croisé au niveau de ladite zone de jonction.
